# EUROPEAN PATENT APPLICATION

(11) **EP 4 011 490 A1**
(43) Date of publication of application: **15.06.2022**
(21) Application number: 20213913.5
(22) Date of filing: 14.12.2020
(51) Int. Cl.: B01J 13/16, A01N 25/28

(54) **PROCESS FOR PREPARING MICROCAPSULES**

(71) Applicant: Syngenta Crop Protection AG, 4058 Basel (CH)
(72) Inventor: The designation of the inventor has not yet been filed
(74) Representative: SYNGENTA IP

(57) **Abstract**

The present invention relates to a process for preparing microcapsules via interfacial polymerization in oil-in-water emulsions and oil-in-water emulsions comprising such microcapsules.

## Description

### Technical Field

The present invention relates to a process for preparing microcapsules via interfacial polymerization in oil-in-water emulsions and oil-in-water emulsions comprising such microcapsules.

### Background

Microencapsulation is known in many fields of technology. In the agrochemical field, microencapsulation can be beneficial for example for controlling the rate of release of the active ingredient, to ensure chemical stability of the active ingredient, to protect the operators from exposure to the active ingredients. The commonly employed process for preparing microcapsules in the agrochemical field is the use of oil-soluble monomers selected from diisocyanates and polyisocyanates, and then react these with water or with water-soluble diamines and polyamines at the oil-water interface of oil-water emulsions. This leads then to the formation of polyurea capsule walls. Such encapsulation technology in the formulation of agrochemical active ingredients is well known to those skilled in the art (see, for example, P.J. Mulqueen in "Chemistry and Technology of Agrochemical Formulations", D.A. Knowles, editor, Kluwer Academic Publishers, 1998, pages 132-147).
Sustainability of agrochemical formulations has become an important target in the agrochemical field. The target is to develop products with low environmental impact. As part of this, the biodegradability of microplastics has become an important topic. Polyurea based microcapsules as used in many agrochemical formulations are not biodegradable which poses an environmental challenge. Hence, there is a need to provide new processes for preparing microcapsules which are biodegradable. It is the purpose of this invention to provide a new process for preparing biodegradable microcapsules in oil-in-water emulsions. This process enables the preparation of biodegradable microcapsules at the oil-water interface of an emulsion.

### Detailed description of the invention

It has been surprisingly found that biodegradable microcapsules can be obtained in oil-in-water emulsions using free-radical polymerization under specific conditions. Hence, in a first aspect, as embodiment 1, there is provided a process for the preparation of microcapsules comprising the steps of
- preparing an oil-phase comprising a multifunctional ethylenically unsaturated monomer or oligomer wherein the water solubility of the multifunctional ethylenically unsaturated monomer or oligomer at 20°C in deionized water is less than 2 gram/liter, preferably less than 1 gram/liter, more preferably less than 0.1 gram/liter,
- forming an oil-in-water emulsion with the oil phase,
- subjecting the oil-in-water emulsion to conditions suitable to initiate interfacial polymerization at the oil-water interface using a radical initiator with a water solubility at 20°C in deionized water which is at least 1 gram/liter, preferably 10 gram/liter, more preferably 20 gram/liter.

The oil used in the "oil phase" of the present invention is generally comprised of water-immiscible solvents which are well-known to a skilled person in the art, such as but not limited to, one or more of petroleum distillates such as aromatic hydrocarbons derived from benzene, such as toluene, xylenes, other alkylated benzenes and the like, and naphthalene derivatives; aliphatic hydrocarbons such as hexane, octane, cyclohexane, and the like; mineral oils from the aliphatic or isoparaffinic series, and mixtures of aromatic and aliphatic hydrocarbons; halogenated aromatic or aliphatic hydrocarbons; dialkyl amides of short and long chain; saturated or unsaturated carboxylic acids; C₁-C₁₂ esters of aromatic carboxylic acids and dicarboxylic acids; C₁-C₁₂ esters of aliphatic and cyclo-aliphatic carboxylic acids. Particularly suitable water-immiscible solvents include but are not limited to Solvesso^{®} 100/200 (mixture of aromatic hydrocarbons), ethylhexyl acetate and toluene.

As used herein, the term "multifunctional ethylenically unsaturated monomer or oligomer" means a substance with two or more ethylenically unsaturated groups at terminal positions of the molecule. The water solubility of the "multifunctional ethylenically unsaturated monomer or oligomer" is important in the above process. The water solubility needs to be such that the monomer or oligomer partitions predominantly into the oil phase of an oil-in-water emulsion.

As used herein, the term "radical initiator" means a substance that can produce radical species to promote radical reactions. Typical examples of radical initiators are molecules with a nitrogen-halogen bond, azo compounds and organic or inorganic peroxides. In order that the process according to embodiment 1 can successfully be carried out, the radical intiator needs to have a water solubility great enough that radical initiator partitions predominantly into the water phase of an oil-in-water emulsion.

The preferred water solubilities for both the "multifunctional ethylenically unsaturated monomer or oligomer" and the "radical initiator" are given in embodiment 1. The order of the process steps in embodiment 1 is not essential. Typically, microcapsules according to the present invention may be prepared by first emulsifying an oil phase comprised of an oil and a multifunctional ethylenically unsaturated monomer or oligomer in a water phase comprised of suitable surfactants and water. The emulsion may be formed by homogenizing the oil-in-water emulsion by the use of low or high pressure homogenization until the desired size of oil droplets is obtained. The water-soluble radical initiator may then be added into the oil-in-water emulsion where it will predominantly be present in the water phase. However, it could also be envisaged that the water-soluble radical initiator is already present in the water phase when emulsifying the oil phase in the water phase.

The term "subjecting the oil-in-water emulsion to conditions suitable to initiate interfacial polymerization at the oil-water interface using a radical initiator" means that the conditions of the oil-in-water emulsion need to be such that the radical initiator in the water phase produces free radical species which then in turn react with the oil-soluble multifunctional ethylenically unsaturated monomer or oligomer in a free-radical polymerization reaction at the oil-water interface. A skilled person in the field of polymerization and microencapsulation is well aware of such conditions, for example by heating the oil-in-water emulsion, by irradiating the oil-in-water emulsion (photolysis) or by redox reactions using reducing agents. Preferably, the free-radical polymerization reaction at the oil-water interface is initiated by reacting the radical initiator with a reducing agent.

Hence, as an embodiment 2, there is provided the process according to embodiment 1, wherein the interfacial polymerization at the oil-water interface is initiated by the addition of a water-soluble reducing agent suitable to decompose the radical initiator, wherein the water solubility of the reducing agent at 20°C in deionized water is at least 1 gram/liter, preferably 10 gram/liter, more preferably 20 gram/liter. It is essential that the reducing agent is water-soluble so that it can react with the radical initiator. It has been surprisingly found that if the reducing agent is predominantly partitioned in the oil phase, then the quality of the produced capsules was low and some oil droplets were not even successfully encapsulated. Water-soluble reducing agents suitable in this process include but are not limited to ascorbic acid, sodium sulphite, sodium metabisulfite, sodium bisulfite, sodium thiosulfate, sodium formaldehyde sulfoxylate dihydrate, thiourea and Bruggolite FF7. A typical water-soluble reducing agent which was successfully employed in the process according to the present invention is sodium sulphite.

Furthermore, a "multifunctional ethylenically unsaturated crosslinker" may be present in the oil-phase. The term "multifunctional ethylenically unsaturated crosslinker" means a substance with two or more ethylenically unsaturated groups at terminal positions of the molecule. Such a crosslinker needs to be suitable for polymerizing with the multifunctional ethylenically unsaturated monomer or oligomer as defined above. The main function of the crosslinker is to strengthen the capsule walls at the oil-water interface. Thus, as embodiment 3, there is provided the process according to embodiment 1 or 2, wherein a multifunctional ethylenically unsaturated crosslinker suitable for polymerizing with the multifunctional ethylenically unsaturated monomer or oligomer is present in the oil phase, wherein the water solubility of the multifunctional unsaturated crosslinker at 20°C in deionized water is less than 2 gram/liter, preferably less than 1 gram/liter, more preferably less than 0.1 gram/liter. Again, it is important that the crosslinker is oil-soluble similar to the multifunctional ethylenically unsaturated monomer or oligomer.

As mentioned previously, the aim of the current invention is to provide microcapsules with low environmental impact. As part of this aim, the microcapsules should be biodegradable. The term "biodegradable" is defined as meaning a compound which passes the OECD Guidelines for the Testing of Chemicals, test no. 301 (OECD 301 test). In particular, a compound which is "biodegradable" is defined as a compound which demonstrates at least 30%, preferably more than 40%, more preferably more than 50% and most preferably more than 60% mineralisation measured as evolved CO₂ or consumed O₂ in 28 days, wherein the mineralisation is measured according to test methods OECD TG 301 B, C, D, F or OECD TG 310. Thus, as embodiment 4, there is provided the process according to any one of embodiments 1 to 3, wherein the multifunctional ethylenically unsaturated monomer or oligomer and multifunctional ethylenically unsaturated crosslinker has at least 30%, preferably more than 40%, more preferably more than 50% and most preferably more than 60% mineralisation measured as evolved CO₂ or consumed O₂ in 28 days, wherein the mineralisation is measured according to test methods OECD TG 301 B, C, D, F or OECD TG 310. Preferably, the multifunctional ethylenically unsaturated monomer or oligomer and multifunctional ethylenically unsaturated crosslinker comprise a group independently selected from ester, ether, carbonate and carboxylic anhydride. These groups have been shown to have acceptable biodegradability according to the test given above.

As mentioned previously, both the multifunctional ethylenically unsaturated monomer or oligomer and multifunctional ethylenically unsaturated crosslinker comprise ethylenically unsaturated groups at terminal positions of the molecule. The multifunctional ethylenically unsaturated monomer or oligomer and multifunctional ethylenically unsaturated crosslinker are preferably independently selected from acrylates, methyacrylates, vinyl esters, vinyl ethers, allyl esters and allyl ethers. Particularly, the multifunctional ethylenically unsaturated monomer or oligomer is selected from an acrylate or (meth)acrylate-terminated ester, acrylate or (meth)acrylate-terminated ether, acrylate or (meth)acrylate-terminated carbonate and acrylate or (meth)acrylate-terminated anhydrides. More particularly, the multifunctional ethylenically unsaturated monomer or oligomer is selected from polycaprolactone diacrylate, polycaprolactone dimethacrylate, tripropylenglycoltriacrylate, poly(ethyleneglycol)-b-(propyleneglycol)-b-ethylene glycol dimethacrylate and trimethylolpropane ethoxylate triacrylate.

Furthermore, in particular, the multifunctional ethylenically unsaturated monomer or oligomer is selected from a vinylether-terminated ester, vinylether-terminated ether, vinylether-terminated carbonate and vinylether-terminated anhydride. In another embodiment, the multifunctional ethylenically unsaturated monomer or oligomer is selected from a vinylester-terminated ester, vinylester-terminated ether, vinylester-terminated carbonate and vinylester-terminated anhydride. In a further embodiment, the multifunctional ethylenically unsaturated monomer or oligomer is selected from an allylether-terminated ester, allylether-terminated ether, allylether-terminated carbonate and allylether-terminated anhydride. In an even further embodiment, the multifunctional ethylenically unsaturated monomer or oligomer is selected from an allylester-terminated ester, allylester-terminated ether, allylester-terminated carbonate and allylester-terminated anhydride.

Preferably, the multifunctional ethylenically unsaturated crosslinker is selected from trimethylolpropanetriacrylate, glycerol triacrylate, trimethylolpropanetrimethacrylate and glycerol trimethacrylate.

As mentioned above, the radical initiator needs to be in the water-phase. Preferably, the radical initiator is selected from peroxides and azo compounds. Hence, as embodiment 5, there is provided the process according to any one of embodiments 1 to 4, wherein the radical initiator is selected from peroxides and azo compounds, preferably the radical initiator is ammonium persulfate, 4,4'-azobis(4-cyanovaleric acid), potassium persulfate, t-butylhydroperoxide or hydrogen peroxide.

As mentioned previously, the processes of the current invention are to be employed particularly in the agrochemical field where microencapsulation of active ingredients has many important functions. Hence, as embodiment 6, there is provided a process according to any one of embodiments 1 to 6, wherein the oil-phase further comprises an active ingredient selected from fungicides, herbicides, insecticides, bactericides, acaricides, nematicides and/or plant growth regulators. Preferably, the active ingredient is selected from lambda cyhalothrin, S-metolachlor, prosulfocarb, tefluthrin, clomazome, dimethachlor, acetamiprid and trifluorolin, more preferably, the active ingredient is selected from lambda cyhalothrin and S-metolachlor.

A skilled person is aware that by adjusting the length of time that the mixture is homogenized and/or by adjusting the speed or pressure of the homogenizer, it is possible to produce oil phases of varying sizes. This means in turn that microcapsules of varying sizes can be produced by controlling the size of the oil phases. It was shown that the thickness of the microcapsule walls depends on the amount of multifunctional ethylenically unsaturated monomer or oligomer present in the oil-phase. Furthermore, the amount of radical initiator present in the water-phase is influencing the rate of polymerization at the oil-water interface. The presence of multifunctional ethylenically unsaturated crosslinker in the oil-phase has been shown to influence the robustness of the microcapsule walls. A minimum amount of multifunctional ethylenically unsaturated monomer or oligomer has to be present in the oil-phase for the formation of a capsule wall. It was shown that the capsule wall formation worked best when the weight of the multifunctional ethylenically unsaturated monomer or oligomer is from 2% weight to 75% weight based on the weight of the total oil-phase, preferably from 5% weight to 50% weight, more preferably from 5% weight to 30% weight. Thus, as embodiment 7, there is provided a process according to any one of embodiments 1 to 6, wherein the weight of the multifunctional ethylenically unsaturated monomer or oligomer is from 2% weight to 75% weight based on the weight of the total oil phase, preferably from 5% weight to 50% weight, more preferably from 5% weight to 30% weight.

A skilled person is also well aware that further co-formulants can used to stabilize the oil-in-water emulsion. For example, the microcapsules may have the tendency to aggregate in the emulsion and thus, the use of a dispersant may be necessary to keep the microcapsules apart. This is also particularly important for the long term storage of these oil-in-water emulsions. It was for example shown that microcapsule emulsions could be re-dispersed after storage for two weeks at 40°C and 54°C using a sodium salt of naphthalene sulfonate condensate (Morwet D-425, Nouryon).

It was found that the process according to the present invention is best carried out according to the following sequence:
(i) preparing of an oil-phase comprising
   - a multifunctional ethylenically unsaturated monomer or oligomer in an oil-phase wherein the water solubility of the multifunctional ethylenically unsaturated monomer or oligomer at 20°C in deionized water is less than 2 gram/liter, preferably less than 1 gram/liter, more preferably less than 0.1 gram/liter,
   - optionally a multifunctional ethylenically unsaturated crosslinker,
   - optionally an agrochemically active ingredient,
      preparing a water-phase comprising
   - a radical initiator suitable for initiating polymerization of the multifunctional ethylenically unsaturated monomer or oligomer, wherein the water solubility of the radical initiator at 20°C in deionized water is at least 1 gram/liter, preferably at least 10 gram/liter, more preferably at least 20 gram/liter,
   - optionally a surfactant,
(ii) forming an oil-in-water emulsion by mixing the oil-phase and the water-phase;
(iii) initiating the polymerization at the oil-water interface by the addition of a reducing agent suitable to decompose the radical initiator, wherein the water solubility of the reducing agent at 20°C in deionized water is at least 1 gram/liter, preferably 10 gram/liter, more preferably 20 gram/liter.

Typical solvents for the oil-phase include but are not limited to ethylhexyl acetate, toluene, heavy aromatic solvent (e.g. Aromatic 200, Solvesso^{™} 200). A typical multifunctional ethylenically unsaturated monomer or oligomer is an ester acrylate monomer CN2035 by Sartomer and a typical multifunctional ethylenically unsaturated crosslinker is trimethylolpropane triacrylate. Typical radical initiators include but are not limited to ammonium persulfate, 4,4'-azobis(4-cyanovaleric acid), potassium persulfate, t-butylhydroperoxide and hydrogen peroxide and typical reducing agents include but are not limited to ascorbic acid, sodium sulphite, sodium metabisulfite, sodium bisulfite, sodium thiosulfate, sodium formaldehyde sulfoxylate dihydrate, thiourea and Bruggolite FF7.

In a second aspect of the invention, the present invention relates to oil-in-water emulsion compositions. Thus, as embodiment 8, there is provided an oil-in-water emulsion comprising
(a) an oil phase comprising
   a multifunctional ethylenically unsaturated monomer or oligomer, and
(b) a water-phase comprising
a radical initiator suitable for initiating polymerization of the multifunctional ethylenically unsaturated monomer or oligomer,
wherein the water solubility of the radical initiator at 20°C in deionized water is at least 1 gram/liter, preferably at least 10 gram/liter, more preferably at least 20 gram/liter,
and wherein the water solubility of the multifunctional ethylenically unsaturated monomer or oligomer at 20°C in deionized water is less than 2 gram/liter, preferably less than 1 gram/liter, more preferably less than 0.1 gram/liter.

As embodiment 9, there is provided the oil-in-water emulsion according to embodiment 8 wherein the oil-phase further comprises a multifunctional ethylenically unsaturated crosslinker suitable for polymerizing with the multifunctional ethylenically unsaturated monomer or oligomer, wherein the water solubility of the multifunctional unsaturated crosslinker at 20°C in deionized water is less than 2 gram/liter, preferably less than 1 gram/liter, more preferably less than 0.1 gram/liter.

As embodiment 10, there is provided the oil-in-water emulsion according to embodiment 8 or 9, wherein the multifunctional ethylenically unsaturated monomer or oligomer and the multifunctional ethylenically unsaturated crosslinker is biodegradable according to the OECD 301 test.

As embodiment 11, there is provided the oil-in-water emulsion according to any one of embodiments 8 to 10, wherein the multifunctional ethylenically unsaturated monomer or oligomer and multifunctional ethylenically unsaturated crosslinker are independently selected from acrylates, methyacrylates, vinyl esters, vinyl ethers, allyl esters and allyl ethers. Furthermore, as embodiment 12, there is provided the oil-in-water emulsion according to any one of embodiments 8 to 11, wherein the multifunctional ethylenically unsaturated monomer or oligomer is selected from an acrylate or (meth)acrylate-terminated ester, acrylate or (meth)acrylate-terminated ether, acrylate or (meth)acrylate-terminated carbonate and acrylate or (meth)acrylate-terminated anhydrides. As embodiment 13, there is provided the oil-in-water emulsion according to any one of embodiments 8 to 12, wherein the multifunctional ethylenically unsaturated monomer or oligomer is selected from polycaprolactone diacrylate, polycaprolactone dimethacrylate, tripropylenglycoltriacrylate, poly(ethyleneglycol)-b-(propyleneglycol)-b-ethylene glycol dimethacrylate and trimethylolpropane ethoxylate triacrylate. As embodiment 14, there is provided the oil-in-water emulsion according to any one of embodiments 8 to 13, wherein the multifunctional ethylenically unsaturated monomer or oligomer is selected from a vinylether-terminated ester, vinylether-terminated ether, vinylether-terminated carbonate and vinylether-terminated anhydride. In another embodiment, the multifunctional ethylenically unsaturated monomer or oligomer is selected from a vinylester-terminated ester, vinylester-terminated ether, vinylester-terminated carbonate and vinylester-terminated anhydride. In a further embodiment, the multifunctional ethylenically unsaturated monomer or oligomer is selected from an allylether-terminated ester, allylether-terminated ether, allylether-terminated carbonate and allylether-terminated anhydride. In an even further embodiment, the multifunctional ethylenically unsaturated monomer or oligomer is selected from an allylester-terminated ester, allylester-terminated ether, allylester-terminated carbonate and allylester-terminated anhydride.

Preferably, the multifunctional ethylenically unsaturated crosslinker is selected from trimethylolpropanetriacrylate, glycerol triacrylate, trimethylolpropanetrimethacrylate and glycerol trimethacrylate.

As embodiment 15, there is provided the oil-in-water emulsion composition according to any one of embodiments 8 to 14, wherein the radical initiator is selected from peroxides and azo compounds; as embodiment 16, the radical initiator in the water-phase is ammonium persulfate, 4,4'-azobis(4-cyanovaleric acid), potassium persulfate, t-butylhydroperoxide or hydrogen peroxide, more preferably ammonium persulfate or 4,4'-azobis(4-cyanovaleric acid).

As embodiment 16, there is provided the oil-in-water emulsion composition according to any one of embodiments 8 to 16, wherein the oil-phase further comprises an active ingredient selected from fungicides, herbicides, insecticides, bactericides, acaricides, nematicides and/or plant growth regulators.

As embodiment 17, there is provided the oil-in-water emulsion composition according to any one of embodiments 8 to 16, wherein the active ingredient is selected from lambda cyhalothrin, S-metolachlor, prosulfocarb, tefluthrin, clomazome, dimethachlor, acetamiprid and trifluorolin.

As embodiment 18, there is provided the oil-in-water emulsion composition according to any one of embodiments 8 to 17, wherein the active ingredient is selected from lambda cyhalothrin and S-metolachlor.

In a further embodiment 19 of the invention, there is provided the oil-in-water emulsion composition according to any one of embodiments 8 to 18, wherein the weight of the multifunctional ethylenically unsaturated monomer or oligomer is from 2% weight to 75% weight based on the weight of the total oil phase, preferably from 5% weight to 50% weight, more preferably from 5% weight to 30% weight.

As embodiment 20, there is provided the oil-in-water emulsion composition according to any one of embodiments 8 to 19, wherein the water-phase further comprises a reducing agent suitable to decompose the radical initiator, wherein the water solubility of the reducing agent at 20°C in deionized water is at least 1 gram/liter, preferably 10 gram/liter, more preferably 20 gram/liter. In a further embodiment 21, there is provided the oil-in-water emulsion composition according to embodiment 20, wherein the reducing agent is selected from ascorbic acid, sodium sulphite, sodium metabisulfite, sodium bisulfite, sodium thiosulfate, sodium formaldehyde sulfoxylate dihydrate, thiourea and Bruggolite FF7.

As mentioned previously, the oil-in-water emulsions according to the present invention lead to free-radical polymerization at the oil-water interface. Hence, as embodiment 22, there is provided the oil-in-water emulsion composition according to any one of embodiments 8 to 21, wherein the oil-phase and water-phase are separated by a microcapsule wall comprising polymerized multifunctional ethylenically unsaturated monomers or oligomers.

As explained above, the oil-in-water emulsions according to the present invention find in particular application in agriculture. Thus, the present invention also provides agricultural compositions comprising the products obtained from the processes according to any one of embodiments 1 to 7 or the oil-in-water emulsions according to any one of embodiments 8 to 22. Hence, as embodiment 23, there is provided an agricultural composition comprising a product obtained by a process according to any one of embodiments 1 to 7. As embodiment 24, there is provided an agricultural composition comprising an oil-in-water emulsion according to any one of embodiments 8 to 22. As embodiment 25, there is provided an agricultural composition according to embodiment 23 or 24, further comprising one or more adjuvants.

In a further embodiment, there is provided the use of an oil-in-water emulsion according to any one of claims 8 to 22 or an agricultural composition according to any one of embodiments 23 to 25 for combating, preventing or controlling phytopathogenic diseases in a useful plant susceptible to attack by a phytopathogen.

In a further embodiment, there is provided the use of an oil-in-water emulsion according to any one of claims 8 to 22 or an agricultural composition according to any one of embodiments 23 to 25 for controlling or preventing pests.

In a further embodiment, there is provided a method for controlling or preventing pests, which comprises applying an oil-in-water emulsion according to any one of embodiments 8 to 22 or an agricultural composition according to any one of embodiments 23 to 25 to the pests or their environment.

In a further embodiment, there is provided a method for combating, preventing or controlling phytopathogenic diseases in a useful plant susceptible to attack by a phytopathogen, which comprises applying an oil-in-water emulsion according to any one of embodiments 8 to 22 or an agricultural composition according to any one of embodiments 23 to 25 to the phytopathogens or their environment.

The present invention is exemplied with the examples below which are not meant to limit the scope of the invention.

### Experimental

### Materials used:

| **Function** | **Water-phase** | **Oil-phase** |
|---|---|---|
| Solvents | Deionized water | - Solvesso 200 |
| | | - Ethylhexyl acetate |
| | | - Toluene |
| Radical initiator | - Ammonium persulfate (APS) | - Azobisisobutyronitrile (AIBN) |
| | - 4,4'-Azobis(4-cyanovaleric acid) (ACVA) | |
| Reducing agent | - Sodium sulphite | - Tetramethylethylenediamine (TMEDA) |
| Multifunctional ethylenically unsaturated monomer or oligomer | N/A | - CN2035 ester acrylates (purchased from Sartomer) |
| Multifunctional ethylenically unsaturated crosslinker | N/A | - Trimethylolpropane triacrylate (TMPTA) |

### Equipment used:

- T25 Ultra-Turrax (IKA homogenizer)
- Malvern Mastersizer 2000: Particle size distribution measurements
- Leitz Diaplan microscope with Leica camera: Images were captured and processed using Leitz software with typical magnifications of 4X, 10X, 25X and 40X.
- Scanning electron cryomicroscopy: used for freeze-fracture to determine the internal structure.
- Genevac (SP)

### Experiments:

*General method for microcapsule synthesis:* Oil-phase is added to water-phase before emulsifying the sample at 14,000 - 18,000 rpm for 1 - 3 minutes to prepare the emulsion. The free-radical polymerization is then initiated, e.g. by heating or by the addition of a reducing agent.

### Overview of Experiments:

After synthesis of the initial emulsion, experiments were designed to activate the vinyl bonds of the CN2035 acrylate chain ends and thus initiate crosslinking resulting in the formation of a microcapsule shell. Furthermore, incorporation of an additional hydrophobic crosslinker (such as trimethylolpropane triacrylate) was used to enhance the robustness of the shell. In order to achieve capsule synthesis, both redox, i.e. using a reducing agent, and thermal initiation of the radical initiators was investigated. Initiator solubility was varied from hydrophilic to hydrophobic, thus enabling variation in the type of polymers synthesised, yielding microcapsules and matrix microparticles respectively. To demonstrate the benefit of encapsulation, LCY (lambda cyhalothrin) and SMOC (S-metolachlor) were successfully encapsulated using redox initiation at room temperature. Characterisation of LCY release demonstrated delayed release from the capsule shells. Microcapsules were also prepared using ethylhexyl acetate as the organic core, before removing water and organic solvent on a Genevac^{®} and re-dispersing in water. The subsequent re-dispersed empty capsules were analysed in successive experiments to determine their biodegradation profile.

### Thermal Radical Initiation with Varying Hydrophobic and Hydrophilic Initiators:

For each experiment, the radical initiator was dissolved in the respective soluble phase, eg. AIBN (azobisisobutyronitrile) was dissolved in the oil-phase (Solvesso 200 with CN2035 & TMPTA) and ACVA in the aqueous phase. The phase containing the radical initiator was added to the second phase (oil- or water-phase not containing a radical initiator), before emulsifying and heating the suspension to 80°C with stirring overnight. Characterisation by Mastersizer and optical microscopy (in the wet and dry) showed the microcapsules retained their structure well upon dry down with minimal aggregation. Further characterisation of a droplet of each AIBN and ACVA initiated microparticles via CryoSEM analysis confirmed the structure of matrix microparticles and microcapsules, respectively. This means that the radical initiator solubility determines the final microparticle structure .For instance, when an oil soluble radical initiator is used, the free-radical polymerization occurred throughout the oil-phase, resulting in a matrix microparticle. Conversely, when a water soluble radical initiator is used the free-radical polymerization and crosslinking only occurred at the oil-water interface.

### Redox Radical Initiation:

In all cases described below, a water soluble radical initiator was used (eg., ACVA or APS). All capsules were characterised by Mastersizer and optical microscopy (in the wet and after drying on a glass slide). In order to determine the effect of initiator solubility, the following two systems were investigated:
1) Microcapsule synthesis was attempted using TMEDA & APS and TMEDA & ACVA. An aliquot of APS (or ACVA) was added to the water-phase, with TMEDA in the oil-phase before emulsifying using the general conditions detailed above. The emulsion was left to stir at 30°C overnight, before taking an aliquot of the solution and leaving it to dry on a glass slide for two days. After two days of drying, the microcapsules appeared to retain some structure on dry-down, indicating that a small proportion of cross linking had occurred. However, not all the oil droplets had successfully been encapsulated and most of the obtained microcapsules appeared to have weak shells on dry-down.
2) Microcapsules were prepared using the same methodology detailed above, but dissolving sodium sulphite and APS in the water-phase. The capsules were left to stir at 30°C (and subsequently room temperature) overnight, before taking an aliquot of the solution and leaving it to dry on a glass slide for two days. The resultant sample showed high levels of encapsulation, with the capsules having obvious dimples in the wet, confirming encapsulation, as well as collapsing, but maintaining a robust capsule structure on dry-down.
It can be concluded that the solubility of the reducing agents was found to be crucial to efficient encapsulation. Microcapsules were formed using both systems 1) and 2) above; however, redox initiation using an oil soluble reducing agent appeared significantly lower yielding compared to when a fully water-soluble redox initiation system is applied.

### Encapsulation of Lambda Cyhalothrin (LCY): Delayed release

LCY was dissolved in Solvesso 200 and added to a continuous aqueous phase containing ACVA, the mixture was emulsified using the generalised conditions outlined above before heating the system to 80°C and leaving it to stir overnight. The resultant solution severely aggregated, i.e. no useful microcapsule dispersion was created.

Redox initiation can occur at room temperature and so in this experiment LCY was dissolved in Solvesso 200 and added to a continuous water-phase before emulsifying and adding APS and sodium sulphite and leaving overnight at room temperature to stir. The resultant capsule suspension was characterised *via* Mastersizer and optical microscopy (in the wet and dry). Optical microscopy analysis showed dimpled capsules in the wet with minimal aggregation and collapsing but robust capsule structures on dry-down. Characterisation of the LCY content before and after crosslinking confirmed there was no interaction between LCY and the radical shell forming components, thus confirming successful encapsulation of LCY.

The release rate of LCY from crosslinked and non-crosslinked microcapsules was analysed using the current standard method for monitoring capsule release, *via* extraction into a mixture of ethanol and hexane. As expected, the non-crosslinked emulsion displayed no controlled release, whereas, the crosslinked capsules demonstrated fast delayed release, comparable to the commercial polyurea LCY microcapsules (Warrior^{®} II).

### Encapsulation of S-Metolachlor (SMOC):

SMOC (480 mg/L) has a higher water solubility compared to LCY (0.005 mg/L), therefore, the influence of the Al solubility on the microencapsulation process was investigated. Furthermore, the capsules are required to be stable for 2 years on a shelf and therefore the stability of SMOC microcapsules was investigated under accelerated storage conditions.

SMOC was dissolved in Solvesso 200 and added to a water-phase before emulsifying and adding APS and sodium sulphite. The resultant microcapsule suspension was stirred at room temperature overnight before characterisation *via* Mastersizer and optical microscopy (in the wet and dry). Optical microscopy confirmed successful encapsulation, with dimpled misshapen microcapsules with minimal aggregation observed that retained their structure well upon dry down. After crosslinking, a range of dispersants was added to individual samples of the microcapsule suspensions, before storing the samples for 2 weeks at 54°C and 8 weeks at 40°C. The microcapsules without the addition of a surfactant severely aggregated during accelerated storage; however, the addition of the surfactant Morwet^{®} D425 successfully stabilised the microcapsule suspensions, which could be re-dispersed after 2 weeks at 54°C and after 8 weeks at 40°C. Hence, SMOC was successfully encapsulated and then stabilised by the post-addition of a dispersant.

### Microcapsules synthesis using ethylhexyl acetate as the organic core in the oil-phase:

Microcapsules were prepared by dissolving CN2035 & TMPTA in *ethylhexyl* acetate, before emulsifying and adding APS and sodium sulphite. The subsequent emulsion was left to stir overnight before characterising the microcapsules *via* Mastersizer analysis and optical microscopy (in the wet and dry). Good encapsulation was observed with capsules structures similar to Solvesso 200, LCY and SMOC. After observing the successful microencapsulation, the water and organic core was successfully removed using a Genevac^{®} (freeze-drier). The dried capsules were re-dispersed in water. Hence, microcapsules can successfully be synthesised using *ethylhexyl* acetate as the organic core, i.e. as solvent in the oil-phase. Furthermore, the organic core can be removed using a suitable technique to provide empty polymer shells for future biodegradation testing.

## Claims

1. A process for the preparation of microcapsules comprising the steps of
- preparing an oil-phase comprising a multifunctional ethylenically unsaturated monomer or oligomer wherein the water solubility of the multifunctional ethylenically unsaturated monomer or oligomer at 20°C in deionized water is less than 2 gram/liter, preferably less than 1 gram/liter, more preferably less than 0.1 gram/liter,
- forming an oil-in-water emulsion with the oil phase,
- subjecting the oil-in-water emulsion to conditions suitable to initiate interfacial polymerization at the oil-water interface using a radical initiator with a water solubility at 20°C in deionized water which is at least 1 gram/liter, preferably 10 gram/liter, more preferably 20 gram/liter.

2. The process according to claim 1, wherein
wherein the interfacial polymerization at the oil-water interface is initiated by the addition of a water-soluble reducing agent suitable to decompose the radical initiator, wherein the water solubility of the reducing agent at 20°C in deionized water is at least 1 gram/liter, preferably 10 gram/liter, more preferably 20 gram/liter.

3. The process according to claim 1 or 2, wherein a multifunctional ethylenically unsaturated crosslinker suitable for polymerizing with the multifunctional ethylenically unsaturated monomer or oligomer is present in the oil phase, wherein the water solubility of the multifunctional unsaturated crosslinker at 20°C in deionized water is less than 2 gram/liter, preferably less than 1 gram/liter, more preferably less than 0.1 gram/liter.

4. The process according to any one of claims 1 to 3,
wherein the multifunctional ethylenically unsaturated monomer or oligomer and multifunctional ethylenically unsaturated crosslinker has at least 30%, preferably more than 40%, more preferably more than 50% and most preferably more than 60% mineralisation measured as evolved CO₂ or consumed O₂ in 28 days, wherein the mineralisation is measured according to test methods OECD TG 301 B, C, D, F or OECD TG 310.

5. The process according to any one of claims 1 to 4, wherein the multifunctional ethylenically unsaturated monomer or oligomer and multifunctional ethylenically unsaturated crosslinker are independently selected from acrylates, methyacrylates, vinyl esters, vinyl ethers, allyl esters and allyl ethers.

6. The process according to any one of claims 1 to 4, wherein the multifunctional ethylenically unsaturated monomer or oligomer is selected from an acrylate or (meth)acrylate-terminated ester, acrylate or (meth)acrylate-terminated ether, acrylate or (meth)acrylate-terminated carbonate and acrylate or (meth)acrylate-terminated anhydride.

7. The process according to claim 6, wherein the multifunctional ethylenically unsaturated monomer or oligomer is selected from polycaprolactone diacrylate, polycaprolactone dimethacrylate, tripropylenglycoltriacrylate, poly(ethyleneglycol)-b-(propyleneglycol)-b-ethylene glycol dimethacrylate and trimethylolpropane ethoxylate triacrylate.

8. The process according to any one of claims 1 to 7, wherein
the radical initiator is selected from peroxides and azo compounds.

9. The process according to any one of claims 1 to 8, wherein
the oil-phase further comprises an active ingredient selected from fungicides, herbicides, insecticides, bactericides, acaricides, nematicides and/or plant growth regulators.

10. The process according to any one of claims 1 to 7, wherein the active ingredient is selected from lambda cyhalothrin, S-metolachlor, prosulfocarb, tefluthrin, clomazome, dimethachlor, acetamiprid and trifluorolin.

11. The process according to any one of claims 1 to 10, wherein the weight of the multifunctional ethylenically unsaturated monomer or oligomer is from 2% weight to 75% weight based on the weight of the total oil phase, preferably from 5% weight to 50% weight, more preferably from 5% weight to 30% weight.

12. An oil-in-water emulsion comprising
(a) an oil phase comprising
a multifunctional ethylenically unsaturated monomer or oligomer, and
(b) a water-phase comprising
a radical initiator suitable for initiating polymerization of the multifunctional ethylenically unsaturated monomer or oligomer,
wherein the water solubility of the radical initiator at 20°C in deionized water is at least 1 gram/liter, preferably at least 10 gram/liter, more preferably at least 20 gram/liter,
and wherein the water solubility of the multifunctional ethylenically unsaturated monomer or oligomer at 20°C in deionized water is less than 2 gram/liter, preferably less than 1 gram/liter, more preferably less than 0.1 gram/liter.

13. The oil-in-water emulsion composition according to claim 12,
wherein the oil-phase further comprises a multifunctional ethylenically unsaturated crosslinker suitable for polymerizing with the multifunctional ethylenically unsaturated monomer or oligomer, wherein the water solubility of the multifunctional unsaturated crosslinker at 20°C in deionized water is less than 2 gram/liter, preferably less than 1 gram/liter, more preferably less than 0.1 gram/liter.

14. The oil-in-water emulsion composition according to claim 12 or 13, wherein
the water-phase further comprises a water-soluble reducing agent suitable to decompose the radical initiator, wherein the water solubility of the reducing agent at 20°C in deionized water is at least 1 gram/liter, preferably 10 gram/liter, more preferably 20 gram/liter.

15. The oil-in-water emulsion composition according to claim 14, wherein
the reducing agent is selected from ascorbic acid, sodium sulphite, sodium metabisulfite, sodium bisulfite, sodium thiosulfate, sodium formaldehyde sulfoxylate dihydrate, thiourea and Bruggolite FF7.
